# FASCICULE DE BREVET EUROPEEN

(11) **EP 3 818 252 B1**
(45) Date de publication et mention de la délivrance du brevet: **03.09.2025**
(21) Numéro de dépôt: 19733818.9
(22) Date de dépôt: 02.07.2019
(51) Int. Cl.: F01D 17/10, F04D 27/02, F02C 9/18, F02K 3/075

(54) **TURBOMACHINE POUR AERONEF COMPORTANT UNE PLURALITE DE VANNES DE DECHARGE VARIABLE ET PROCEDE DE COMMANDE**
TURBOMASCHINE FÜR FLUGZEUG MIT EINER VIELZAHL VON VARIABLEN BYPASSVENTILEN UND STEUERUNGSVERFAHREN
TURBOMACHINE FOR AIRCRAFT COMPRISING A PLURALITY OF VARIABLE BYPASS VALVES AND CONTROL METHOD

(30) Priorité: 06.07.2018 FR 1856232
(43) Date de publication de la demande: 12.05.2021
(73) Titulaire: SAFRAN AIRCRAFT ENGINES, 75015 Paris (FR)
(72) Inventeur: VAN GANSEN, Mathieu Daniel Marie, 77550 MOISSY-CRAMAYEL (FR); GUILLOT, Lise Jeanne Bernadette, 77550 MOISSY-CRAMAYEL (FR)
(74) Mandataire: Argyma
(86) Numéro de dépôt international: PCT/EP2019/067709
(87) Numéro de publication internationale: WO 2020/007847

(56) Documents cités:
- WO-A1-2008/147260
- CA-A1- 2 208 801
- FR-A1- 2 983 911
- US-A1- 2008 001 039

## Description

### DOMAINE TECHNIQUE GENERAL ET ART ANTERIEUR

La présente invention concerne la commande des vannes de décharge d'un compresseur d'une turbomachine pour aéronef.

De manière connue, un aéronef comporte une ou plusieurs turbomachines pour permettre la propulsion de l'aéronef. Une turbomachine s'étend axialement selon un axe X et comporte un compresseur, une chambre de combustion et une turbine. La turbomachine comprend une veine primaire dans laquelle circule un flux d'air destiné à la chambre de combustion et une veine secondaire dans laquelle circule un flux d'air destiné à la propulsion.

Afin d'éviter un défaut d'opérabilité de la turbomachine, en particulier un phénomène de pompage de la turbomachine, il est connu de décharger une partie du flux d'air circulant dans la veine primaire dans la veine secondaire. A cet effet, le compresseur de la turbomachine comporte une pluralité de vannes de décharge variable, connue de l'homme du métier sous leur désignation anglaise « Variable Bypass Valve » ou « VBV ».

Chaque vanne de décharge variable est configurée pour se déplacer entre une position fermée, dans laquelle une circulation de la veine primaire vers la veine secondaire est interdite, et une position ouverte dans laquelle une circulation de la veine primaire vers la veine secondaire est autorisée. En position ouverte, un flux d'air primaire est déchargé dans la veine secondaire, ce qui abaisse la pression dans le compresseur et évite le phénomène de pompage. En outre, en position ouverte, les vannes de décharge variable permettent également l'éjection de débris centrifugés présents dans le flux primaire (eau, sable, poussière, glace, grêle, tissus organiques suite à l'injection d'oiseaux, etc.).

Par ailleurs, de la glace peut également s'accumuler dans la turbomachine et il est connu de déplacer plusieurs fois les vannes de décharge variable entre leurs positions ouvertes et leurs positions fermées pour libérer la glace accumulée avant que l'accumulation n'atteigne une taille et/ou une masse critique qui pourrait endommager la turbomachine et/ou affecter son fonctionnement.

En pratique, les vannes de décharge variable sont déplacées de manière simultanée par un système de commande qui comporte un anneau de transmission périphérique. Aussi, pour libérer la glace accumulée, les vannes de décharge variable sont déplacées plusieurs fois entre leurs positions ouvertes et leurs positions fermées. Cela présente un inconvénient étant donné que, pendant des périodes de temps, les vannes de décharge sont toutes en position fermée. La veine primaire n'est alors plus déchargée pendant ces courtes périodes de temps et cela peut conduire à un pompage de la turbomachine.

Un des objectifs de la présente invention est de permettre de décharger la veine primaire de la turbomachine lorsque les conditions de fonctionnement l'imposent tout en permettant, dans le même temps, d'évacuer toute accumulation de glace.

Une solution immédiate pour éliminer cet inconvénient serait de prévoir des moyens dédiés au retrait de la glace mais cela impacterait négativement l'encombrement et la masse de la turbomachine. Aussi, une telle solution ne peut pas être retenue.

L'invention a donc pour but de remédier à ces inconvénients en proposant une turbomachine dont la commande des vannes de décharge variable est améliorée.

Le document FR2983911A1 concerne un moteur d'aéronef comprenant des portes des premières amont et des secondes portes aval de décharge du compresseur. Les vannes de décharge variable ne s'étendent pas dans un même plan transversal à l'axe X afin de permettre le passage d'un flux d'air entre la première porte et la seconde porte. De telles vannes possèdent un encombrement longitudinal important.

### PRESENTATION GENERALE DE L'INVENTION

A cet effet, l'invention concerne une turbomachine pour aéronef s'étendant axialement selon un axe X comportant un compresseur, une chambre de combustion et une turbine d'entraînement du compresseur, la turbomachine comprenant une veine primaire dans laquelle circule un flux d'air destiné à la chambre de combustion et une veine secondaire dans laquelle circule un flux d'air destiné à la propulsion, le compresseur comprenant une pluralité de premières vannes de décharge variable, une pluralité de deuxièmes vannes de décharge variable, les vannes de décharge variable s'étendant dans un même plan transversal à l'axe X et étant alternées angulairement, chaque vanne de décharge variable étant configurée pour se déplacer entre une position fermée, dans laquelle une circulation d'un flux d'air de la veine primaire vers la veine secondaire est interdite, et une position ouverte dans laquelle une circulation d'un flux d'air de la veine primaire vers la veine secondaire est autorisée.

L'invention est remarquable en ce qu'elle comporte un premier système de commande configuré pour contrôler le déplacement de la pluralité de premières vannes de décharge variable et un deuxième système de commande configuré pour contrôler le déplacement de la pluralité de deuxièmes vannes de décharge variable, le premier système de commande et le deuxième système de commande étant indépendants de manière à commander indépendamment la pluralité de premières vannes de décharge variable et la pluralité de deuxièmes vannes de décharge variable.

Grâce à l'invention, les premières vannes de décharge variable et les deuxièmes vannes de décharge variable peuvent être commandées de manière alternée, ce qui est avantageux pour retirer une accumulation de glace tout en maintenant, dans le même temps, une décharge du compresseur. De manière avantageuse, il n'est pas nécessaire de prévoir des moyens dédiés au retrait de la glace. Seule la commande des vannes de décharge variable doit être avantageusement modifiée. La présence de deux systèmes de commande permet par ailleurs d'augmenter la fiabilité de la turbomachine en cas de dysfonctionnement.

De manière préférée, le premier système de commande comporte :
- un premier anneau de transmission qui s'étend dans un plan transversal à l'axe X de la turbomachine,
- un premier dispositif moteur configuré pour faire tourner le premier anneau de transmission autour de l'axe X d'un angle prédéterminé et
- une pluralité de premiers mécanismes d'actionnement reliée au premier anneau de transmission, chaque première vanne de décharge variable étant reliée à un premier mécanisme d'actionnement.

Un tel système est avantageux pour commander de manière simultanée les premières vannes de décharge afin de décharger le compresseur de manière homogène à sa périphérie. De manière avantageuse, le premier système de commande est configuré pour régler le degré d'ouverture des vannes de décharge variable en fonction de la position angulaire de l'anneau de transmission.

De préférence, le deuxième système de commande comporte :
- un deuxième anneau de transmission qui s'étend dans un plan transversal à l'axe X de la turbomachine,
- un deuxième dispositif moteur configuré pour faire tourner le deuxième anneau de transmission autour de l'axe X d'un angle prédéterminé,
- une pluralité de deuxièmes mécanismes d'actionnement reliée au deuxième anneau de transmission, chaque deuxième vanne de décharge variable étant reliée à un deuxième mécanisme d'actionnement.

Le premier système de commande et le deuxième système de commande possèdent des structures similaires, ce qui permet de garantir des cinématiques similaires lors de l'ouverture ou de la fermeture. cela est particulièrement avantageux lorsque les premières vannes de décharge variable et les deuxièmes vannes de décharge variable sont commandées de manière simultanée.

De préférence, les premiers mécanismes d'actionnement et les deuxièmes mécanismes d'actionnement sont à une même distance radiale de l'axe X. Cela permet avantageusement de garantir des cinématiques similaires lors de l'ouverture ou de la fermeture

De manière préférée, les premières vannes de décharge variable et les deuxièmes vannes de décharge variable sont alternées à la périphérie de la veine primaire. Un positionnement alterné des vannes de décharge permet une décharge sensiblement homogène à la périphérie même si seulement les premières vannes de décharge variable ou si seulement les deuxièmes vannes de décharge variable sont ouvertes.

De préférence, le premier anneau de transmission s'étend radialement à l'extérieur du deuxième anneau de transmission. L'utilisation d'anneaux de transmission de dimensions différentes permet de limiter l'encombrement axial dans la turbomachine.

De manière préférée, le premier anneau de transmission comporte une pluralité de premiers organes de liaison reliés respectivement aux premiers mécanismes d'actionnement, le deuxième anneau de transmission comporte une pluralité de deuxièmes organes de liaison reliés respectivement aux deuxièmes mécanismes d'actionnement, les premiers organes de liaison et les deuxièmes organes de liaison sont à une même distance radiale de l'axe X de la turbomachine. Ainsi, la cinématique de commande des vannes de décharge variable est avantageusement analogue pour les deux systèmes de commande. Une commande simultanée des premières vannes de décharge variable et des deuxièmes vannes de décharge variable est ainsi optimale.

De manière préférée, le premier anneau de transmission est guidé de manière rotative par rapport au deuxième anneau de transmission. Un tel guidage permet d'améliorer la robustesse de l'ensemble et d'améliorer la précision de la commande.

Selon un aspect de l'invention, le premier anneau de transmission et le deuxième anneau de transmission s'étendent dans un même plan transversal à l'axe X. Cela permet avantageusement de limiter l'encombrement axial.

Selon un autre aspect de l'invention, le premier anneau de transmission est décalé axialement selon l'axe X par rapport au deuxième anneau de transmission. Cela permet avantageusement de s'adapter aux formes des veines de la turbomachine.

De préférence, le compresseur comprenant une pluralité de troisièmes vannes de décharge variable, les vannes de décharge variable s'étendant dans un même plan transversal à l'axe X, la turbomachine comporte un troisième système de commande configuré pour contrôler le déplacement de la pluralité de troisièmes vannes de décharge variable, le premier, deuxième et troisième système de commande étant indépendants de manière à commander indépendamment la pluralité de premières vannes de décharge variable, la pluralité de deuxièmes vannes de décharge variable et la pluralité de troisièmes vannes de décharge variable. L'utilisation de trois ensembles de vannes de décharge variable permet d'offrir de la souplesse et de conserver une décharge importante lorsqu'un des ensembles des vannes de décharge variable est en cours de dégivrage.

De manière préférée, chaque premier mécanisme d'actionnement comporte au moins un guignol rotatif. De préférence encore, chaque dispositif moteur comporte au moins un guignol rotatif.

L'invention concerne également un procédé de commande du déplacement des vannes de décharge variable d'une turbomachine telle que présentée précédemment, procédé comprenant :
- une étape d'ouverture des premières vannes de décharge variable par le premier système de commande à un premier instant t1 et
- une étape d'ouverture des deuxièmes vannes de décharge variable par le deuxième système de commande à un deuxième instant t2, différent du premier instant t1.

Un tel procédé de commande alternative des premières vannes de décharge variable et des deuxièmes vannes de décharge variable permet de dégivrer un compresseur de manière optimale tout en autorisant de manière simultanée une décharge partielle du compresseur.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique générale d'une turbomachine selon l'invention,
- la figure 2 est une représentation schématique en perspective des systèmes de commande des vannes à décharge variable de la turbomachine de la figure 1 selon une première forme de réalisation,
- la figure 3 est représentation rapprochée des systèmes de commande de la figure 2,
- la figure 4 est un diagramme fonctionnel d'un système de commande selon l'invention,
- la figure 5 est une vue des systèmes de commande depuis l'amont de la turbomachine,
- la figure 6 est une vue en coupe transversale des systèmes de commande depuis l'amont de la turbomachine,
- la figure 7 est une représentation schématique en coupe longitudinale d'une deuxième forme de réalisation des systèmes de commande,
- la figure 8 est une représentation schématique en perspective simplifiée de la deuxième forme de réalisation des systèmes de commande,
- la figure 9 est une représentation schématique en coupe longitudinale d'une troisième forme de réalisation des systèmes de commande,
- la figure 10 est une représentation schématique en coupe longitudinale d'une quatrième forme de réalisation des systèmes de commande et
- la figure 11 est une représentation schématique en coupe transversale d'une quatrième forme de réalisation des systèmes de commande.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

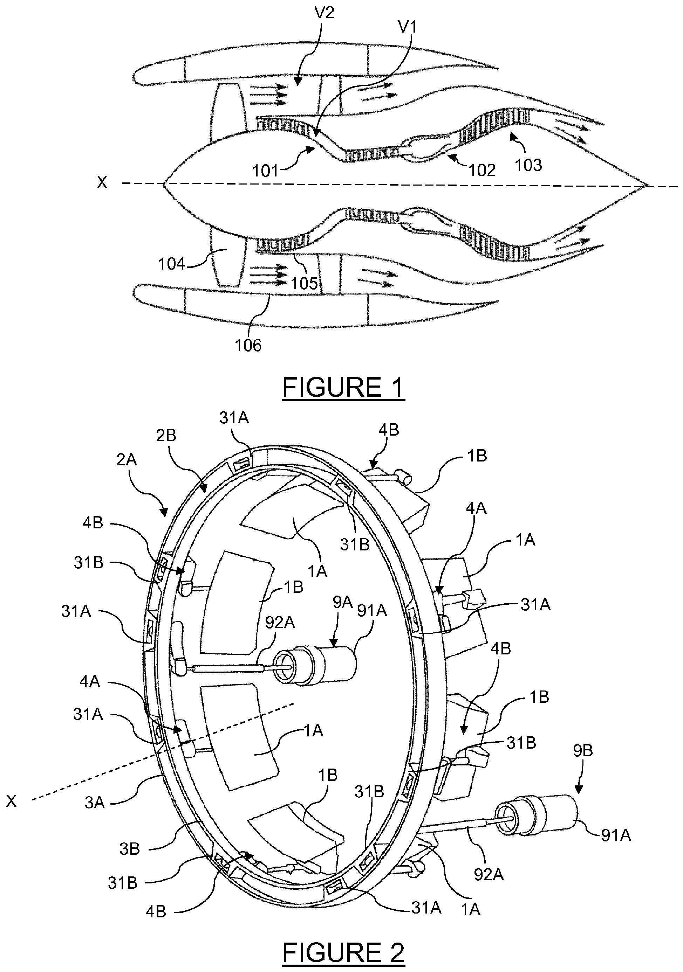

Comme illustré à la figure 1, une turbomachine s'étend longitudinalement selon un axe X et permet de déplacer l'aéronef à partir d'un flux d'air entrant dans le turbomachine et circulant d'amont en aval. Par la suite, les termes « amont » et « aval » sont définis par rapport à l'axe X orienté d'amont en aval. De même, les termes « intérieur » et « extérieur » sont définis selon la direction radiale par rapport à l'axe longitudinal X. La turbomachine comprend une soufflante amont 104, une virole intérieure 105 et une virole extérieure 106.

La soufflante 102 est entrainée en rotation autour de l'axe X de la turbomachine afin d'aspirer un flux d'air qui est séparé par la virole intérieure 105 entre un premier flux d'air d'entrainement de la turbomachine, dit flux primaire, et un deuxième flux d'air de poussée, dit flux secondaire. La virole intérieure 105 s'étend sensiblement selon l'axe X de la turbomachine et la virole extérieure 106 s'étend à l'extérieur de la virole intérieure 105. Le flux d'air primaire s'étend intérieurement à la virole intérieure 105 dans une veine primaire V1 tandis que le flux secondaire s'étend extérieurement à la virole intérieure 105 dans une veine secondaire V2. La virole intérieure 105 et la virole extérieure 106 délimitent la veine secondaire V2 pour la circulation du flux d'air secondaire.

La turbomachine comprend un compresseur 101 pour accélérer le flux primaire, une chambre de combustion 102 pour l'énergiser et une turbine 103 entraînée par le flux d'air énergisé afin d'entraîner le compresseur 101.

Afin d'éviter un défaut d'opérabilité de la turbomachine, en particulier un phénomène de pompage de la turbomachine, le compresseur comprend une pluralité de premières vannes de décharge variable 1A et une pluralité de deuxièmes vannes de décharge variable 1B. Chaque vanne de décharge variable 1A, 1B est configurée pour se déplacer entre une position fermée, dans laquelle une circulation d'un flux d'air de la veine primaire V1 vers la veine secondaire V2 est interdite, et une position ouverte dans laquelle une circulation d'un flux d'air de la veine primaire V1 vers la veine secondaire V2 est autorisée. Les vannes de décharge variable 1A, 1B s'étendent dans un même plan transversal à l'axe X de manière à décharger la veine primaire de manière périphérique.

Selon l'invention, en référence à la figure 2, la turbomachine comporte un premier système de commande 2A configuré pour contrôler le déplacement des premières vannes de décharge variable 1A et un deuxième système de commande 2B configuré pour contrôler le déplacement des deuxièmes vannes de décharge variable 1B, le premier système de commande 2A et le deuxième système de commande 2B étant indépendants.

Comme les systèmes de commande 2A, 2B sont indépendants, les vannes de décharges 1A, 1B peuvent être commandées alternativement, c'est-à-dire de manière décalée dans le temps et non plus de manière simultanée comme dans l'art antérieur. Par exemple, les premières vannes de décharge variable 1A peuvent être ouvertes alors que les deuxièmes vannes de décharge variables 1B sont fermées. Cela est particulièrement avantageux pour évacuer une accumulation de glace tout en limitant le risque de pompage de la turbomachine. Lors du retrait de la glace, il n'existe ainsi plus de courte période de temps durant laquelle les vannes de décharges 1A, 1B sont nécessairement fermées de manière simultanée.

Les systèmes de commande 2A, 2B sont commandés de manière pneumatique ou électrique afin de permettre de réaliser une ouverture/fermeture sélective. Dans le cas d'une commande pneumatique, la turbomachine peut comporter un circuit pneumatique pour chaque système de commande 2A, 2B et une vanne de régulation permettant d'alimenter sélectivement chaque circuit pneumatique.

De manière avantageuse, en cas de défaillance d'un des systèmes de commande 2A, 2B, l'autre système de commande demeure opérationnel, ce qui permet d'augmenter la fiabilité de la turbomachine.

En référence à la figure 2, selon une première forme de réalisation, la turbomachine comporte uniquement des premières vannes de décharge variable 1A et des deuxièmes vannes de décharge variable 1B. Les premières vannes de décharge variable 1A et les deuxièmes vannes de décharge variable 1B sont alternées à la périphérie de la veine primaire V1 et s'étendent dans un même plan transversal à l'axe X de la turbomachine.

Dans cet exemple, la turbomachine comporte quatre premières vannes de décharge variable 1A et quatre deuxièmes vannes de décharge variable 1B. De préférence, la turbomachine possède le même nombre de premières vannes de décharge variable 1A et de deuxièmes vannes de décharge variable 1B. Il va de soi que les nombres de premières/deuxièmes vannes de décharge variable 1A, 1B pourraient être différents.

Conformément à l'invention, la turbomachine comporte un premier système de commande 2A configuré pour contrôler le déplacement des premières vannes de décharge variable 1A et un deuxième système de commande 2B configuré pour contrôler le déplacement des deuxièmes vannes de décharge variable 1B.

Dans cet exemple, le premier système de commande 2A comprend un premier anneau de transmission 3A, de forme périphérique, qui s'étend dans un plan transversal à l'axe X de la turbomachine, un premier dispositif moteur 9A configuré pour faire tourner le premier anneau de transmission 3A autour de son axe X d'un angle prédéterminé, de préférence de manière hélicoïdale, et une pluralité de premiers mécanismes d'actionnement 4A reliée au premier anneau de transmission 3A, chaque première vanne de décharge variable 1A étant reliée à un premier mécanisme d'actionnement 4A. Ainsi, lorsque le premier dispositif moteur 9A est activé, les premières vannes de décharge variable 1A sont déplacées simultanément.

De manière analogue, le deuxième système de commande 2A comporte un deuxième anneau de transmission périphérique 3B qui s'étend dans un plan transversal à l'axe X de la turbomachine, un deuxième dispositif moteur 9B configuré pour faire tourner le premier anneau de transmission 3B autour de son axe X d'un angle prédéterminé et une pluralité de deuxièmes mécanismes d'actionnement 4B reliée au deuxième anneau de transmission 3B, chaque deuxième vanne de décharge variable 1B étant reliée à un deuxième mécanisme d'actionnement 4B. De manière analogue, lorsque le deuxième dispositif moteur 9B est activé, les deuxièmes vannes de décharge variable 1B sont déplacées simultanément.

De manière avantageuse, chaque système de commande 2A, 2B permet de commander de manière simultanée plusieurs vannes de décharge variable 1A, 1B qui sont réparties de manière périphérique. Ainsi, en cas de décharge des premières vannes de décharges variable 1A ou des deuxièmes vannes de décharges variable 1B, la décharge est équilibrée et répartie, ce qui permet une décharge optimale et une réduction du risque de pompage.

De manière préférée, les mécanismes d'actionnement 4A, 4B et les dispositifs moteurs 9A, 9B sont positionnés en aval des anneaux de transmission 3A, 3B afin de limiter l'encombrement.

De préférence, chaque anneau de transmission 3A, 3B demeure centré et dans un plan transversal à l'axe X lors de la cinématique de déplacement. La rigidité de chaque anneau de transmission 3A, 3B lui permet de ne pas se déformer sous contraintes. De manière préférée, le guidage de chaque anneau de transmission 3A, 3B est assuré par des patins ou des interfaces de liaison calibrées.

De préférence, les anneaux de transmission 3A, 3B sont configurés pour tourner autour de l'axe X selon des sens opposés lors d'une ouverture ou d'une fermeture simultanée. Il va de soi qu'une rotation dans un même sens pourrait également convenir.

Chaque anneau de transmission 3A, 3B possède une forme périphérique et s'étend orthogonalement à l'axe X selon lequel s'étend la turbomachine.

Dans cet exemple, en référence à la figure 2, les anneaux de transmission 3A, 3B s'étendent dans un même plan transversal à l'axe X. Le premier anneau de transmission 3A possède un diamètre plus grand que le diamètre du deuxième anneau de transmission 3B. Le premier anneau de transmission 3A et le deuxième anneau de transmission 3B sont coaxiaux, le premier anneau de transmission 3A s'étendant radialement à l'extérieur du deuxième anneau de transmission 3B.

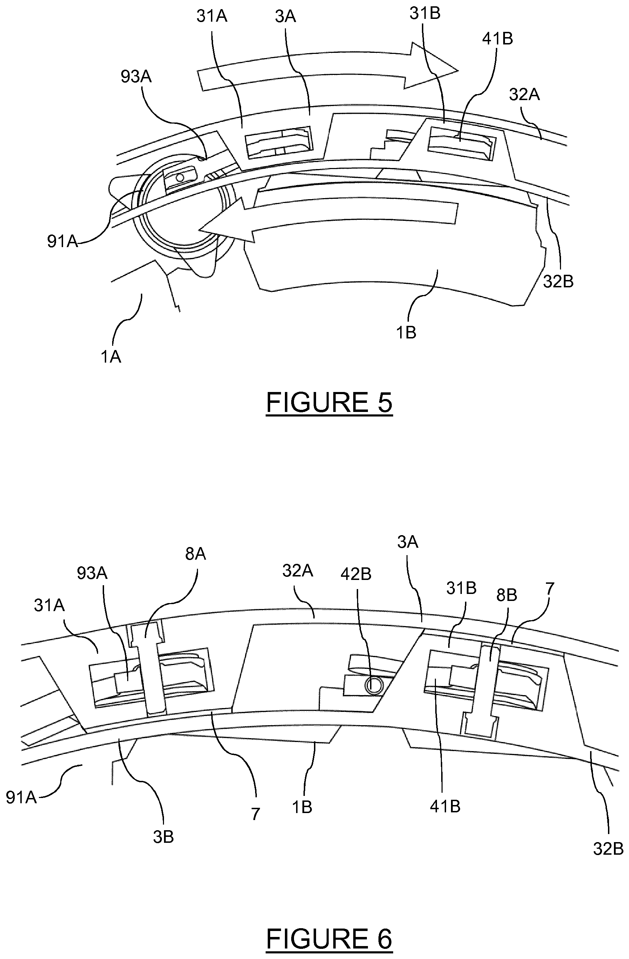

Le premier anneau de transmission 3A est monté de manière rotative par rapport au deuxième anneau de transmission 3B. En référence à la figure 6, chaque anneau de transmission 3A, 3B comporte des moyens de guidage 7, notamment des festons ou des patins, afin de permettre aux anneaux de transmission 3A, 3B de se déplacer l'un par rapport à l'autre en rotation autour de l'axe X. De manière préférée, les moyens de guidage 7 sont formés aux interfaces entre les anneaux de transmission 3A, 3B, en particulier, à l'extrémité de leurs organes de liaison 31A, 31B. Un tel guidage améliore la robustesse des cinématiques de commande au cours du temps.

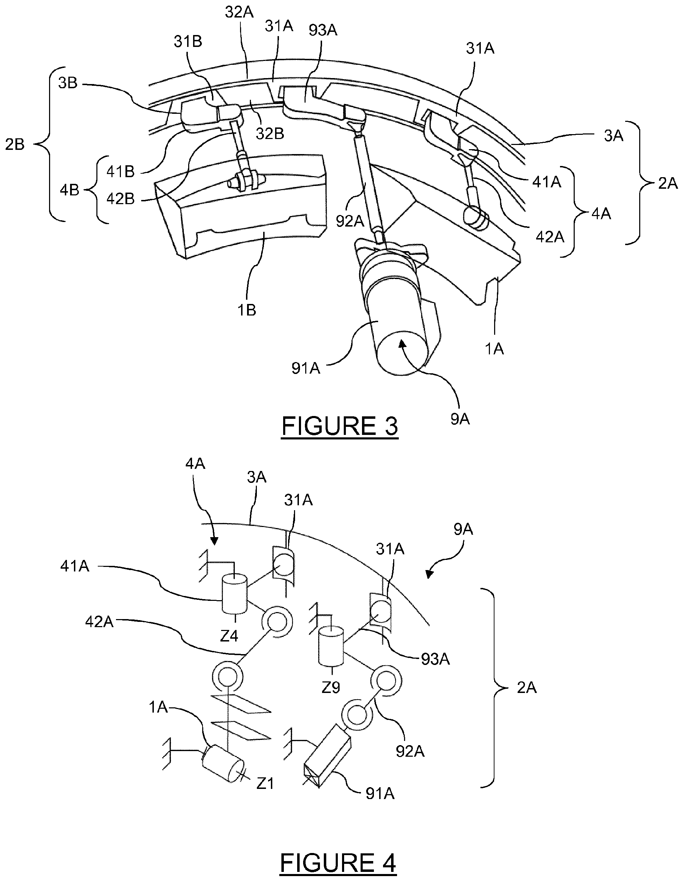

Comme illustré à la figure 3, le premier anneau de transmission 3A comporte une partie annulaire 32A depuis laquelle s'étendent radialement vers l'intérieur plusieurs premiers organes de liaison 31A permettant la liaison avec le premier dispositif moteur 9A mais également avec les premiers mécanismes d'actionnement 4A. Dans cette forme de réalisation, comme illustré à la figure 2, le premier anneau de transmission 3A comporte cinq premiers organes de liaison 31A (un pour relier chaque première vanne de décharge variable 1A et un pour relier le premier dispositif moteur 9A).

En référence aux figures 5 et 6, chaque premier organe de liaison 31A possède sensiblement une forme de parallélogramme comprenant une paroi de base solidaire de la partie annulaire 32A et une paroi de tête sensiblement parallèle à la paroi de base. La paroi de base est reliée à la paroi de tête par deux parois qui convergent vers la paroi de tête comme illustré aux figures 5 et 6. Autrement dit, la paroi de tête possède une dimension plus faible que celle de la paroi de base afin de limiter les frottements avec le deuxième anneau de transmission 3B.

En outre, chaque premier organe de liaison 31A comporte une ouverture, s'étendant parallèlement à l'axe X, dans lequel est monté un premier mécanisme d'actionnement 4A ou un premier dispositif moteur 9A. De préférence, en référence à la figure 6, le montage d'un premier mécanisme d'actionnement 4A ou d'un premier dispositif moteur 9A est réalisé par insertion d'un premier organe de fixation 8A de manière radiale vers l'intérieur.

De manière analogue, le deuxième anneau de transmission 3B comporte une partie annulaire 32B depuis laquelle s'étendent radialement vers l'extérieur plusieurs deuxième organes de liaison 31B permettant la liaison avec le deuxième dispositif moteur 9B mais également avec les deuxièmes mécanismes d'actionnement 4B. Dans cette forme de réalisation, comme illustré à la figure 2, le deuxième anneau de transmission 3B comporte cinq deuxièmes organes de liaison 31B (un pour relier chaque deuxième vanne de décharge variable 1B et un pour relier le deuxième dispositif moteur 9B).

Chaque deuxième organe de liaison 31B comporte une ouverture, s'étendant parallèlement à l'axe X, dans lequel est monté un deuxième mécanisme d'actionnement 4B ou un deuxième dispositif moteur 9B. De préférence, en référence à la figure 6, le montage d'un deuxième mécanisme d'actionnement 4B ou d'un deuxième dispositif moteur 9B est réalisé par insertion d'un deuxième organe de fixation 8B de manière radiale vers l'extérieur.

Le deuxième anneau de transmission 3B est imbriqué dans le premier anneau de transmission 3A dans un même plan transversal. De manière préférée, les premiers organes de liaison 31A et les deuxièmes organes de liaison 31B, reliés aux vannes de décharge variable 1A, 1B, sont alternés de manière périphérique. De manière préférée, les premiers organes de liaison 31A et les deuxièmes organes de liaison 31B s'étendent à une même distance radiale de l'axe X afin de limiter l'encombrement et permettre une cinématique de commande analogue pour les anneaux de transmission 3A, 3B.

Dans cet exemple et de manière préférée, le premier dispositif moteur 9A et le deuxième dispositif moteur 9B sont identiques aussi, par souci de clarté et de concision, seul le premier dispositif moteur 9A va être présenté de manière détaillée.

Dans cet exemple, en référence aux figures 4 à 6, le premier dispositif moteur 9A comporte un vérin commandable 91A configuré pour se déployer selon un axe parallèle à l'axe X de la turbomachine, une bielle de liaison 92A reliée au vérin commandable 91A et un guignol 93A reliant la bielle de liaison 92A au premier anneau de transmission 3A, en particulier, à un premier organe de liaison 31A. Un guignol 93A permet avantageusement de convertir le mouvement longitudinal du vérin commandable 91A en un mouvement tangentiel afin d'entrainer le premier anneau de transmission 3A en rotation autour de l'axe X d'un angle de rotation qui est fonction de la course du premier vérin commandable 91A. Comme illustré à la figure 4, le guignol 93A est monté rotatif autour d'un axe Z9 dans la turbomachine. Il va de soi que le premier dispositif moteur 9A pourrait se présenter sous des formes différentes.

De manière alternative, il pourrait être prévu un premier dispositif moteur 9A comportant un vérin commandable 91A configuré pour se déployer selon un axe orthogonal à l'axe X de la turbomachine, en particulier, tangentiellement au premier anneau de transmission 3A.

Dans cet exemple et de manière préférée, les premiers mécanismes d'actionnement 4A et les deuxièmes mécanismes d'actionnement 4B sont identiques aussi, par souci de clarté et de concision, seuls les premiers mécanismes d'actionnement 4A vont être présentés de manière détaillée.

Dans cet exemple, en référence aux figures 4 à 6, le premier mécanisme d'actionnement 4A comporte un guignol 41A relié au premier anneau de transmission 3A, en particulier, à un premier organe de liaison 31A, une bielle de liaison 42A reliant le guignol 41A à une première vanne de décharge variable 1A afin de la faire pivoter autour d'un axe d'articulation Z1 orthogonal à l'axe X. Comme illustré à la figure 4, le guignol 41A est monté rotatif autour d'un axe Z4 dans la turbomachine. Il va de soi que le premier mécanisme d'actionnement 9A pourrait se présenter sous des formes différentes.

Ainsi, la commande du premier dispositif moteur 9A permet de régler de manière simultanée le degré d'ouverture de l'ensemble des premières vannes de décharge variable 1A. De manière analogue, la commande du deuxième dispositif moteur 9B permet de régler de manière simultanée le degré d'ouverture de l'ensemble des deuxièmes vannes de décharge variable 1B. Lorsque la cinématique des commandes des vannes de décharge variable 1A, 1B est identique, cela permet de commander toutes les vannes de décharge variable de manière identique, c'est-à-dire, comme si elles étaient commandées par un seul et même système de commande comme dans l'art antérieur.

Lorsque le premier dispositif moteur 9A et le deuxième dispositif moteur 9B ne sont pas activés de manière simultanée, certaines vannes de décharge variable 1A, 1B sont ouvertes tandis que d'autre sont fermées (ouverture des premières vannes de décharge variable 1A à un premier instant t1 puis ouverture des deuxièmes vannes de décharge variable 1B à un deuxième instant t2). Une ouverture alternative des vannes de décharge variable 1A, 1B permet d'évacuer une éventuelle accumulation de glace dans la turbomachine sans interdire une décharge du compresseur 101. Les inconvénients de l'art antérieur sont alors éliminés.

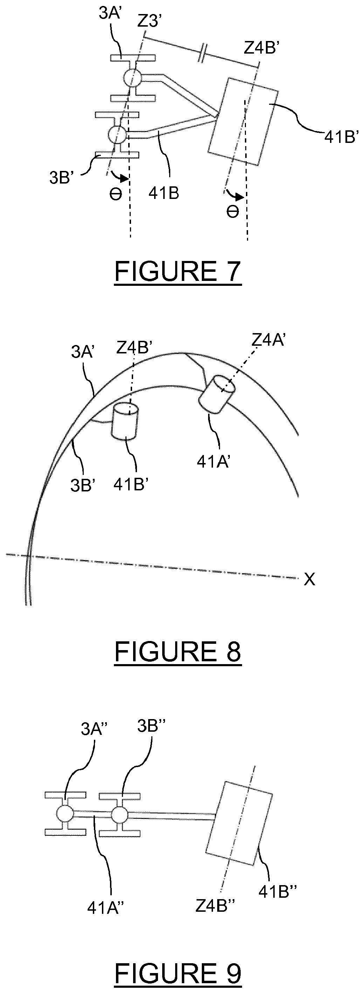

Plusieurs formes de réalisation sont présentées aux figures 7 à 11. Par souci de clarté et de concision, les éléments de la première forme de réalisation ne sont pas de nouveaux décrits, seules les différences structurelles et fonctionnelles vont être détaillées. De plus, les éléments analogues entre les forme de réalisation sont référencés de manière analogue.

Selon une deuxième forme de réalisation, en référence aux figures 7 à 8, les anneaux de transmission 3A', 3B' demeurent coaxiaux mais ne sont pas imbriqués l'un avec l'autre mais superposés radialement. Les anneaux de transmission 3A', 3B' sont distant radialement de manière à délimiter entre eux un espace annulaire vide. Autrement dit, les premiers organes de liaison 31A et les deuxièmes organes de liaison 31B s'étendent à des distances radiales différentes de l'axe X.

Dans cet exemple, les anneaux de transmission 3A', 3B' sont décalés axialement selon l'axe X. Une telle solution peut être avantageuse pour limiter l'encombrement axial des systèmes de commande 3A', 3B' et obtenir des cinématiques de commande analogues.

En référence à la figure 7, selon une vue en coupe longitudinale selon l'axe X, les anneaux de transmission 3A', 3B' sont alignés selon un axe d'alignement Z3' qui forme un angle Θ avec le plan transversal à l'axe X. De manière préférée les guignols 41A', 41B' reliés respectivement aux anneaux de transmission 3A', 3B' sont articulés sur des axes Z4A', Z4B', chaque axe Z4A', Z4B' formant un angle Θ avec le plan transversal à l'axe X. Une telle caractéristique permet avantageusement de commander les premières vannes de décharge variable et les deuxièmes vannes de décharge variable selon une même cinématique.

Selon une troisième forme de réalisation, en référence à la figure 9, les anneaux de transmission 3A", 3B" ne sont plus dans un même plan transversal mais sont alignés axialement selon l'axe X. Dans cet exemple, le premier anneau de transmission 3A" est monté en amont du deuxième anneau de transmission 3B". Les mécanismes d'actionnement et les dispositifs moteurs sont positionnés en aval des anneaux de transmission 3A", 3B". Afin de permettre le déplacement du premier anneau de transmission 3A" situé le plus en amont, le deuxième anneau de transmission 3B" comporte des lumières dans lesquels s'étendent les guignols 41A" fixés au premier anneau de transmission 3A". Une telle solution est avantageuse pour limiter l'encombrement des systèmes de commande. Les anneaux de transmission 3A", 3B" peuvent être avantageusement déplacés selon des cinématiques analogues.

Selon une quatrième forme de réalisation, la turbomachine comporte des premières vannes de décharge variable, des deuxièmes vannes de décharge variable et des troisièmes vannes de décharge variable. Les premières, les deuxièmes et les troisièmes vannes de décharge variable sont alternées à la périphérie de la veine primaire et s'étendent dans un même plan transversal à l'axe X.

La turbomachine comporte un premier système de commande configuré pour contrôler le déplacement de la pluralité de premières vannes de décharge variable, un deuxième système de commande configuré pour contrôler le déplacement de la pluralité de deuxièmes vannes de décharge variable et un troisième système de commande configuré pour contrôler le déplacement de la pluralité de troisièmes vannes de décharge variable.

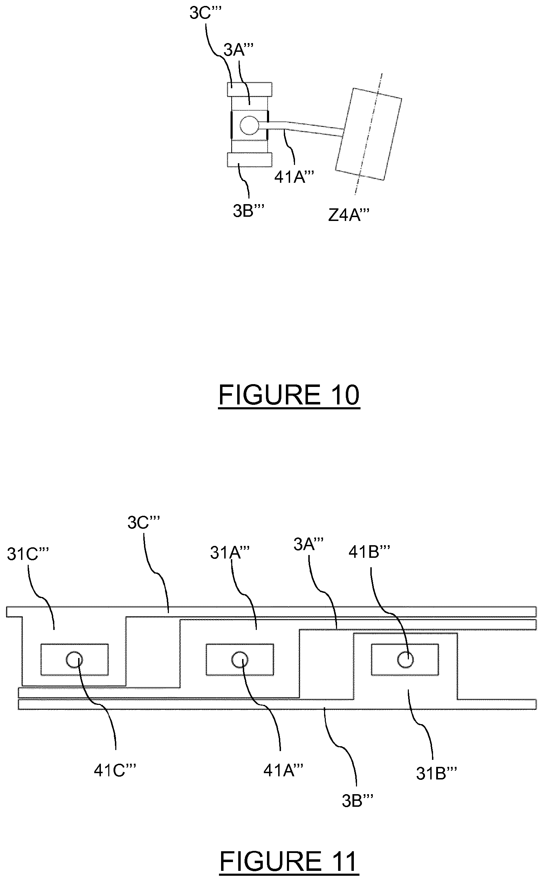

En référence aux figures 10 à 11, le premier système de commande comporte un premier anneau de transmission 3A"', le deuxième système de commande comporte un deuxième anneau de transmission 3B‴, le troisième système de commande comporte un troisième anneau de transmission 3C"'.

Les anneaux de transmission 3A"', 3B"', 3C"' sont coaxiaux et s'étendent dans un même plan transversal à l'axe X. Le troisième anneau de transmission 3C"' s'étend radialement à l'extérieur du premier anneau de transmission 3A"' qui lui-même s'étend radialement à l'extérieur du deuxième anneau de transmission 3B"' comme illustré aux figures 10 et 11. En référence à la figure 11, les anneaux de transmission 3A‴, 3B"', 3C"' comportent respectivement des organes de liaison 31A"', 31B"', 31C"' qui sont à une même distance radiale de l'axe X afin de pouvoir commander, selon une cinématique analogue, les guignols 41A"', 41B‴, 41C‴ pour l'actionnement.

L'utilisation de trois anneaux de transmission 3A"', 3B"', 3C"' permet de fournir de la flexibilité lors de la décharge du compresseur 101 de la turbomachine. Il va de soi que la turbomachine pourrait comporter plus de trois ensembles de vannes de décharge variable et autant de systèmes de commande associés.

## Revendications

1. Turbomachine pour aéronef s'étendant axialement selon un axe X comportant un compresseur (101), une chambre de combustion (102) et une turbine (103) pour l'entraînement du compresseur (101), la turbomachine comprenant une veine primaire (V1) dans laquelle circule un flux d'air destiné à la chambre de combustion (102) et une veine secondaire (V2) dans laquelle circule un flux d'air destiné à la propulsion, le compresseur (101) comprenant une pluralité de premières vannes de décharge variable (1A), une pluralité de deuxièmes vannes de décharge variable (1B), les vannes de décharge variable (1A, 1B) s'étendant dans un même plan transversal à l'axe X et étant alternées angulairement, chaque vanne de décharge variable (1A, 1B) étant configurée pour se déplacer entre une position fermée, dans laquelle une circulation d'un flux d'air de la veine primaire (V1) vers la veine secondaire (V2) est interdite, et une position ouverte dans laquelle une circulation d'un flux d'air de la veine primaire (V1) vers la veine secondaire (V2) est autorisée, la turbomachine comportant un premier système de commande (2A) configuré pour contrôler le déplacement de la pluralité de premières vannes de décharge variable (1A) et un deuxième système de commande (2B) configuré pour contrôler le déplacement de la pluralité de deuxièmes vannes de décharge variable (1B), le premier système de commande (2A) et le deuxième système de commande (2B) étant indépendants de manière à commander indépendamment la pluralité de premières vannes de décharge variable (1A) et la pluralité de deuxièmes vannes de décharge variable (1B).

2. Turbomachine pour aéronef selon la revendication 1, dans laquelle le premier système de commande (2A) comporte :
∘ un premier anneau de transmission (3A, 3A', 3A", 3A"') qui s'étend dans un plan transversal à l'axe X de la turbomachine,
∘ un premier dispositif moteur (9A) configuré pour faire tourner le premier anneau de transmission (3A) autour de l'axe X d'un angle prédéterminé et
∘ une pluralité de premiers mécanismes d'actionnement (4A) reliée au premier anneau de transmission (3A, 3A', 3A", 3A"'), chaque première vanne de décharge variable (1A) étant reliée à un premier mécanisme d'actionnement (4A).

3. Turbomachine pour aéronef selon l'une des revendications 1 et 2, dans laquelle le deuxième système de commande (2B) comporte :
∘ un deuxième anneau de transmission (3B, 3B', 3B", 3B"') qui s'étend dans un plan transversal à l'axe X de la turbomachine,
∘ un deuxième dispositif moteur (9B) configuré pour faire tourner le deuxième anneau de transmission (3B, 3B', 3B", 3B"') autour de l'axe X d'un angle prédéterminé,
∘ une pluralité de deuxièmes mécanismes d'actionnement (4B) reliée au deuxième anneau de transmission (3B, 3B', 3B", 3B"'), chaque deuxième vanne de décharge variable (1B) étant reliée à un deuxième mécanisme d'actionnement (4B).

4. Turbomachine pour aéronef selon les revendications 2 et 3, dans laquelle les premiers mécanismes d'actionnement (4A) et les deuxièmes mécanismes d'actionnement (4B) sont à une même distance radiale de l'axe X.

5. Turbomachine pour aéronef selon l'une des revendications 1 à 4, dans laquelle les premières vannes de décharge variable (1A) et les deuxièmes vannes de décharge variable (1B) sont alternées à la périphérie de la veine primaire (V1).

6. Turbomachine pour aéronef selon l'une des revendications 1 à 5, dans laquelle le premier anneau de transmission (3A, 3A"') s'étend radialement à l'extérieur du deuxième anneau de transmission (3B, 3B"').

7. Turbomachine pour aéronef selon l'une des revendications 1 à 6, dans laquelle le premier anneau de transmission (3A, 3A"') est guidé de manière rotative par rapport au deuxième anneau de transmission (3B, 3B"').

8. Turbomachine pour aéronef selon l'une des revendications 1 à 7, dans laquelle le premier anneau de transmission (3A, 3A"') et le deuxième anneau de transmission (3B, 3B‴) s'étendent dans un même plan transversal à l'axe X.

9. Turbomachine pour aéronef selon l'une des revendications 1 à 7, dans laquelle le premier anneau de transmission (3A', 3A") est décalé axialement selon l'axe X par rapport au deuxième anneau de transmission (3B', 3B").

10. Turbomachine pour aéronef selon l'une revendication 1 à 9, dans laquelle le compresseur (101) comprenant une pluralité de troisièmes vannes de décharge variable, les vannes de décharge variable s'étendant dans un même plan transversal à l'axe X, la turbomachine comporte un troisième système de commande configuré pour contrôler le déplacement de la pluralité de troisièmes vannes de décharge variable, le premier, deuxième et troisième système de commande étant indépendants de manière à commander indépendamment la pluralité de premières vannes de décharge variable, la pluralité de deuxièmes vannes de décharge variable et la pluralité de troisièmes vannes de décharge variable.

11. Procédé de commande du déplacement des vannes de décharge variable (1A, 1B) d'une turbomachine selon l'une des revendications 1 à 10, procédé comprenant :
- une étape d'ouverture des premières vannes de décharge variable (1A) par le premier système de commande (2A) à un premier instant t1 et
- une étape d'ouverture des deuxièmes vannes de décharge variable (1B) par le deuxième système de commande (2A) à un deuxième instant t2, différent du premier instant t1.

## Patentansprüche

1. Turbomaschine für ein Luftfahrzeug, die sich axial gemäß einer X-Achse erstreckt, aufweisend einen Verdichter (101), eine Brennkammer (102) und eine Turbine (103) zum Antrieb des Verdichters (101), wobei die Turbomaschine einen Primärkanal (V1) umfasst, in dem ein Luftstrom für die Brennkammer (102) zirkuliert, und einen Sekundärkanal (V2), in dem ein Luftstrom für den Antrieb zirkuliert, wobei der Verdichter (101) eine Vielzahl erster Ventile für variable Entlastung (1A) und eine Vielzahl zweiter Ventile für variable Entlastung (1B) umfasst, wobei sich die Ventile für variable Entlastung (1A, 1B) in ein und derselben Ebene quer zur X-Achse erstrecken und winklig alternierend sind, wobei jedes Ventil für variable Entlastung (1A, 1B) ausgelegt ist, um sich zwischen einer geschlossenen Position, in der eine Zirkulation eines Luftstroms vom Primärkanal (V1) zum Sekundärkanal (V2) untersagt ist, und einer geöffneten Position, in der eine Zirkulation eines Luftstroms vom Primärkanal (V1) zum Sekundärkanal (V2) gestattet ist, zu bewegen, wobei die Turbomaschine ein erstes Steuersystem (2A) aufweist, das ausgelegt ist, um die Bewegung der Vielzahl erster Ventile für variable Entlastung (1A) zu steuern, und ein zweites Steuersystem (2B), das ausgelegt ist, um die Bewegung der Vielzahl zweiter Ventile für variable Entlastung (1B) zu steuern, wobei das erste Steuersystem (2A) und das zweite Steuersystem (2B) derart unabhängig sind, dass die Vielzahl erster Ventile für variable Entlastung (1A) und die Vielzahl zweiter Ventile für variable Entlastung (1B) unabhängig gesteuert werden.

2. Turbomaschine ein Luftfahrzeug nach Anspruch 1, wobei das erste Steuersystem (2A) aufweist:
∘ einen ersten Übertragungsring (3A, 3A', 3A", 3A‴), der sich in einer Ebene quer zur X-Achse der Turbomaschine erstreckt,
∘ eine erste Motorvorrichtung (9A), die ausgelegt ist, um den ersten Übertragungsring (3A) in einem vorgegebenen Winkel um die X-Achse zu drehen, und
∘ eine Vielzahl erster Betätigungsmechanismen (4A), die mit dem ersten Übertragungsring (3A, 3A', 3A", 3A"') verbunden sind, wobei jedes erste Ventil für variable Entlastung (1A) mit einem ersten Betätigungsmechanismus (4A) verbunden ist.

3. Turbomaschine für ein Luftfahrzeug nach einem der Ansprüche 1 und 2, wobei das zweite Steuersystem (2B) aufweist:
∘ einen zweiten Übertragungsring (3B, 3B', 3B", 3B‴), der sich in einer Ebene quer zur X-Achse der Turbomaschine erstreckt,
∘ eine zweite Motorvorrichtung (9B), die ausgelegt ist, um den zweiten Übertragungsring (3B, 3B', 3B", 3B"') in einem vorbestimmten Winkel um die X-Achse zu drehen,
∘ eine Vielzahl zweiter Betätigungsmechanismen (4B), die mit dem zweiten Übertragungsring (3B, 3B', 3B", 3B‴) verbunden sind, wobei jedes zweite Ventil für variable Entlastung (1B) mit einem zweiten Betätigungsmechanismus (4B) verbunden ist.

4. Turbomaschine für ein Luftfahrzeug nach den Ansprüchen 2 und 3, wobei die ersten Betätigungsmechanismen (4A) und die zweiten Betätigungsmechanismen (4B) den gleichen radialen Abstand von der X-Achse haben.

5. Turbomaschine für ein Luftfahrzeug nach einem der Ansprüche 1 bis 4, wobei die ersten Ventile für variable Entlastung (1A) und die zweiten Ventile für variable Entlastung (1B) am Umfang des Primärkanals (V1) alternierend sind.

6. Turbomaschine für ein Luftfahrzeug nach einem der Ansprüche 1 bis 5, wobei sich der erste Übertragungsring (3A, 3A‴) radial außerhalb des zweiten Übertragungsrings (3B, 3B"') erstreckt.

7. Turbomaschine für ein Luftfahrzeug nach einem der Ansprüche 1 bis 6, wobei der erste Übertragungsring (3A, 3A"') in Bezug auf den zweiten Übertragungsring (3B, 3B‴) rotatorisch geführt wird.

8. Turbomaschine für ein Luftfahrzeug nach einem der Ansprüche 1 bis 7, wobei sich der erste Übertragungsring (3A, 3A‴) und der zweite Übertragungsring (3B, 3B‴) in ein und derselben Ebene quer zur X-Achse erstrecken.

9. Turbomaschine für ein Luftfahrzeug nach einem der Ansprüche 1 bis 7, wobei der erste Übertragungsring (3A', 3A") in Bezug auf den zweiten Übertragungsring (3B', 3B") gemäß der X-Achse axial versetzt ist.

10. Turbomaschine für ein Luftfahrzeug nach einem der Ansprüche 1 bis 9, wobei der Verdichter (101) eine Vielzahl dritter Ventile für variable Entlastung umfasst, wobei sich die Ventile für variable Entlastung in ein und derselben Ebene quer zur X-Achse erstrecken, die Turbomaschine ein drittes Steuersystem aufweist, das ausgelegt ist, um die Bewegung der Vielzahl dritter Ventile für variable Entlastung zu steuern, wobei das erste, zweite und dritte Steuersystem derart unabhängig sind, dass die Vielzahl erster Ventile für variable Entlastung, die Vielzahl zweiter Ventile für variable Entlastung und die Vielzahl dritter Ventile für variable Entlastung unabhängig gesteuert werden.

11. Verfahren zur Steuerung der Bewegung der Ventile für variable Entlastung (1A, 1B) einer Turbomaschine nach einem der Ansprüche 1 bis 10, wobei das Verfahren umfasst:
- einen Schritt des Öffnens der ersten Ventile für variable Entlastung (1A) durch das erste Steuersystem (2A) zu einem ersten Zeitpunkt t1 und
- einen Schritt des Öffnens der zweiten Ventile für variable Entlastung (1B) durch das zweite Steuersystem (2A) zu einem zweiten Zeitpunkt t2, der sich vom ersten Zeitpunkt t1 unterscheidet.

## Claims

1. A turbomachine for an aircraft extending axially along an axis X, comprising a compressor (101), a combustion chamber (102) and a turbine (103) for driving the compressor (101), the turbomachine comprising a primary duct (V1) through which flows an air flow intended for the combustion chamber (102) and a secondary duct (V2) through which flows an air flow intended for propulsion, the compressor (101) comprising a plurality of first variable bypass valves (1A), a plurality of second variable bypass valves (1B), the variable bypass valves (1A, 1B) extending in a same plane transverse to the axis X and being angularly alternated, each variable bypass valve (1A, 1B) being configured to move between a closed position in which a flow of an air flow from the primary duct (V1) to the secondary duct (V2) is prevented, and an open position in which a flow of an air flow from the primary duct (V1) to the secondary duct (V2) is permitted, the turbomachine comprising a first control system (2A) configured to control the movement of the plurality of first variable bypass valves (1A) and a second control system (2B) configured to control the movement of the plurality of second variable bypass valves (1B), the first control system (2A) and the second control system (2B) being independent so as to control the plurality of first variable bypass valves (1A) and the plurality of second variable bypass valves (1B) independently.

2. The turbomachine for an aircraft according to claim 1, wherein the first control system (2A) comprises:
∘ a first transmission ring (3A, 3A', 3A", 3A‴) which extends in a plane transverse to the axis X of the turbomachine,
∘ a first motor device (9A) configured to rotate the first transmission ring (3A) about the axis X by a predetermined angle, and
∘ a plurality of first actuating mechanisms (4A) connected to the first transmission ring (3A, 3A', 3A", 3A‴), each first variable bypass valve (1A) being connected to a first actuating mechanism (4A).

3. The turbomachine for an aircraft according to one of claims 1 and 2, wherein the second control system (2B) comprises:
∘ a second transmission ring (3B, 3B', 3B", 3B‴) which extends in a plane transverse to the axis X of the turbomachine,
∘a second motor device (9B) configured to rotate the second transmission ring (3B, 3B', 3B", 3B‴) about the axis X by a predetermined angle,
∘a plurality of second actuating mechanisms (4B) connected to the second transmission ring (3B, 3B', 3B", 3B‴), each second variable bypass valve (1B) being connected to a second actuating mechanism (4B).

4. The turbomachine for an aircraft according to claims 2 and 3, wherein the first actuating mechanisms (4A) and the second actuating mechanisms (4B) are at the same radial distance from the axis X.

5. The turbomachine for an aircraft according to one of claims 1 to 4, wherein the first variable bypass valves (1A) and the second variable bypass valves (1B) are alternated at the periphery of the primary duct (V1).

6. The turbomachine for an aircraft according to one of claims 1 to 5, wherein the first transmission ring (3A, 3A‴) extends radially outside the second transmission ring (3B, 3B‴).

7. The turbomachine for an aircraft according to one of claims 1 to 6, wherein the first transmission ring (3A, 3A‴) is rotatably guided with respect to the second transmission ring (3B, 3B‴).

8. The turbomachine for an aircraft according to one of claims 1 to 7, wherein the first transmission ring (3A, 3A‴) and the second transmission ring (3B, 3B‴) extend in the same plane transverse to the axis X.

9. The turbomachine for an aircraft according to one of claims 1 to 7, wherein the first transmission ring (3A', 3A") is offset axially along the axis X with respect to the second transmission ring (3B', 3B").

10. The turbomachine for an aircraft according to any one of claims 1 to 9, wherein the compressor (101) comprises a plurality of third variable bypass valves, the variable bypass valves extending in a same plane transverse to the axis X, the turbomachine comprises a third control system configured to control the movement of the plurality of third variable bypass valves, the first, second and third control systems being independent so as to control independently the plurality of first variable bypass valves, the plurality of second variable bypass valves and the plurality of third variable bypass valves.

11. A method of controlling the movement of the variable bypass valves (1A, 1B) of a turbomachine according to any of claims 1 to 10, the method comprising:
- a step of opening the first variable bypass valves (1A) by the first control system (2A) at a first time t1 and
- a step of opening the second variable bypass valves (1B) by the second control system (2A) at a second time t2, different from the first time t1.
